# EUROPEAN PATENT SPECIFICATION

(11) **EP 2 111 356 B1**
(45) Date of publication and mention of the grant of the patent: **22.07.2015**
(21) Application number: 08713940.8
(22) Date of filing: 24.01.2008
(51) Int. Cl.: B65B 1/04, B65B 41/18, B65B 57/02, B65B 9/20, B65D 81/26, B01D 53/04, B01J 20/28

(54) **SORBENT PACKAGING**
SORPTIONSMITTELVERPACKUNG
EMBALLAGE DE SORBANT

(30) Priority: 26.01.2007 US 627774
(43) Date of publication of application: 28.10.2009
(73) Proprietor: Multisorb Technologies, Inc., Buffalo, NY 14224 (US)
(72) Inventor: DEFEDERICIS, Allen, Alden, New York 14004 (US); ARNONE, Anthony J., West Valley, n 14171 (US); MILLEN, Peter R., Warsaw, New York 14569 (US)
(74) Representative: Howard, Paul Nicholas
(86) International application number: PCT/US2008/051835
(87) International publication number: WO 2008/091968

(56) References cited:
- EP-A1- 1 203 718
- WO-A1-2004/045953
- JP-A- 10 115 895
- JP-A- 2003 170 918
- JP-A- 2005 186 507
- US-A- 4 726 171
- US-A- 4 965 986
- US-A1- 2003 151 512
- US-B1- 6 321 509
- US-B1- 6 508 173

## Description

### BACKGROUND OF THE INVENTION

### FIELD OF THE INVENTION

This invention relates generally to SORBENT PACKAGING and more particularly to packages for sorbent for automatic insertion into products, such as pharmaceutical products.

### DESCRIPTION OF RELATED ART INCLUDING INFORMATION DISCLOSED UNDER 37 CFR 1.97 AND 1.98

Sorbents and especially desiccants have been provided to customers in long strips or bandoliers for many years. Automated high speed machines and methods for manufacturing such products are relatively well-known and a number of companies offer such products to the trade. While no particular minimum number of packets per bandolier has developed, very large spools of packets are available with individual packets numbering up to 10,000 or 15,000 available in a continuous form for automatic separation and insertion into products.

Because one of the functions of the packets is to absorb moisture, oxygen, odor, or other volatiles from products, or potentially desorb materials so as to extend the shelf life and deliver products to customers with their original potency maintained as much as possible, the package for such sorbents is usually porous or permeable to moisture, volatiles, odorants, and the like. While a number of materials have been used over the years to provide the combination of strength and porosity or permeability to moisture that is required for the products, Tyvek brand non-woven materials are especially popular. Non-woven's are both strong and porous and automated methods for the manufacture and insertion of packets made from non-woven materials have been developed by a number of competitors in this field.

Two different forms of non-woven's have become especially popular, adhesive coated non-woven's and raw form non-woven's. Adhesive coated non-woven's are generally formed into packets by heat and pressure applied to the seal areas while plain non-woven's are more commonly sealed by the application of ultrasonic energy and pressure to the seal areas.

Typically, a strip of non-woven material as long or longer than the desired length of the strip of packets is provided to the filling machine. The filling machine sequentially rolls the strip of material around a mandrill and forms a continuous or intermittent elongated longitudinal seal by either overlapping the edges of the non-woven material or forming a fin by sealing the facing edges of the non-woven material together.

A first lateral end seal is formed transversely with respect to the length of the strip of packaging material and a quantity of a sorbent, more particularly a quantity of desiccant is inserted into the open tubular packet. A second lateral end seal is then formed transversely with respect to the packaging material to form a first closed packet of sorbent and to form the bottom seal of a successive packet. The process is repeated until the length of packaging material is exhausted or until the desired number of packets has been formed.

The technique just described has been used for packages formed by heat and pressure on adhesive coated non-woven materials as well as for packages formed by ultrasonic seals formed on raw non-woven materials.

A number of problems has been associated with packages of the type described. The lateral seals must be designed so that when the packages are separated for insertion, usually by cutting the seal laterally the integrity of the seal is maintained. We have discovered that when the seals are formed with a plurality of longitudinally arranged sealing stripes, the packages may tear along the stripes and the contents may leak out to a greater or lesser extent. Arranging the seals in a plurality of lateral rows addresses the tearing problem but creates weakness at the edges of the seal line closest to the content of the package which again can lead to leaks.

Another problem with seals of the type described is that while equipment is has been developed to manufacture the product and to separate and insert the packets into customers products at desirable high rates of speed, the affect of accumulated tolerance errors during manufacturing can eventually leads to alignment errors in the instaflation equipment.

Preferably, the labeling for the packets is printed on the strips of non-woven material prior to manufacture of the packets. As used herein, labeling and labels are intended to be construed broadly so as to include indicia printed directly on the strips, indicia printed on other media that is subsequently applied to the strips and other techniques that will be apparent to those skilled in the art. Where a large number of packets is formed into a continuous string of packets, errors either in the accuracy of the printing or in the manufacturing tolerances during formation and filling of the packets lead to misalignment of the printed area on the packages, including misalignment sufficiently serious to cause the label to fall in the sealed portions of the continuous string of patents. Heretofore, this misalignment has been addressed by providing labels that are printed in closely spaced arrangements such that no matter what size packet is formed and whatever misalignment occurs, one or more labeled areas falls on the surface of the packet where it can be read. Occasionally, a portion of the label also falls in the lateral seal area but this has been regarded as a minor matter from a labeling perspective.

The separation and insertion machine also suffers from the effects of accumulated errors. Although the machine is adjusted to separate the packets at the lateral seal areas, accumulated errors may eventually cause a packet to be cut otherwise than in the lateral seal area, thus releasing the contents of the packet, possibly contaminating the product into which the packet is inserted in and requiring that the remainder of the string of packets be repositioned for subsequent separation and insertion.

Another problem associated with misregistration caused by accumulated errors during manufacturing is that especially when ultrasonic welding is used to form the lateral seals, is that the ink used to label the packages is degraded by the ultrasonic welding equipment and may separate from the package forming small flakes. Often times, even though the ink may be a color other than black, the ultrasonic sealing process turns the ink black and creates black flakes that may become dislodged from the non-woven material. These ink flakes cause a number of problems including accumulating on the jaws of the sealing equipment, releasing from the packet when the packet is dispensed at the point of use and at least visually contaminating the product in which the packet is placed, and otherwise contaminating either the equipment or the products or both. Applicants have found that the problem of flaking ink is exacerbated by the use of a tear resistant knurled ultrasonic welds which are desirable for other purposes. Heretofore, one solution to the flaking ink problem has been to employ food grade inks that may be ingested without harm. This does not address the aesthetic problems however.

Presently available long chains or bandoliers of packets manufactured not only by applicant but by applicant's competitors all suffer from one or more of these problems. While it might seem trivial to address the problems caused by mis-registration for example, to date, probably because of the need to manufacture such packets at extremely high speeds to keep the costs low, the industry has simply accepted the problems even though they create occasionally unusable packages of products that need to be discarded, stored for remediation, treated immediately or the like, and require cleaning of the sealing machines due to ink buildup.

WO 2004/045953 A1 discloses a method for forming packages. US 2003/151512 A1 discloses a dessicant bag.

### BRIEF SUMMARY OF THE INVENTION

This invention relates to improvements in desiccant packaging that address one or more of the foregoing problems. For example, the improvements include providing a knurled ultrasonic lateral seal for packets made from non-woven material without adhesive which seal resists fraying and tearing where the packages are separated and furthermore does not create points of weakness where the contents of the packet may leak out.

The objects of the invention are achieved by a method for forming according to claim 1, an elongated strip according to claim 5, an elgongated web according to claim 8, an apparatus according to claim 10, and a method for inserting according to claim 12.

In accordance with another aspect of the invention, each package includes a printed area comprising visible indicia spaced between adjacent sealing areas so that the sealing areas are substantially free of printing.

In accordance with another aspect of the invention, the effect of registration errors is reduced by providing a registration mark on each package, the registration mark located a known distance from a lateral seal and most preferably located outside the sealing area.

### BRIEF DESCRIPTION OF THE SEVERAL VIEWS OF THE DRAWING(S)

While the novel aspects of the invention are set forth with particularity in the appended claims, the invention itself together with further objects and advantages thereof may be more readily comprehended by reference to the following detailed description of the invention taken in conjunction with the following drawings in which:
Figure 1 is a perspective view of a portion of a strip of sorbent packages in accordance with this invention;
Figure 2 is a plan view of the backside of the sorbent packages of figure 1;
Figure 3 is a plan view of a strip of printed material for forming the sorbent package of figures 1 and 2;
Figure 4 is a schematic representation of a machine for forming and filling the strip of packages shown in figure 1; and
Figure 5 is a schematic view of a machine for cutting and inserting the packages of the strip of figure 1 into the containers in which they are used.

### DETAILED DESCRIPTION OF THE INVENTION

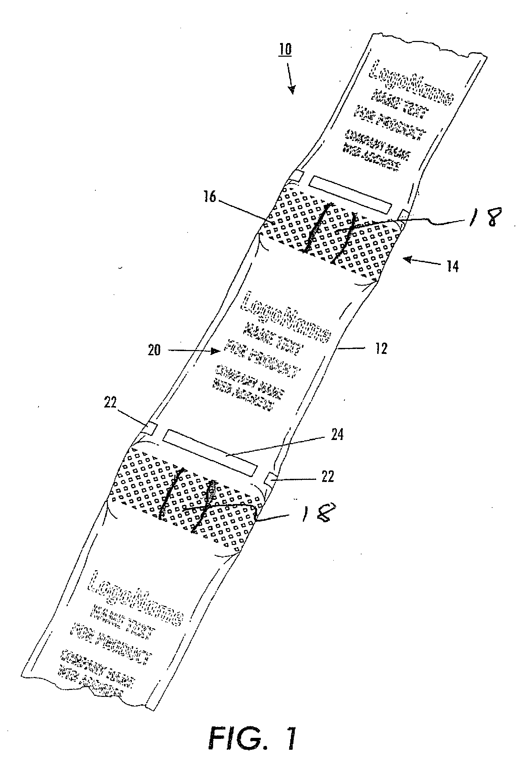

Referring now to Figure 1, a portion of a strip sorbent packages in accordance with this invention is illustrated in diagrammatic form. While portions of three packages are shown, it is preferred in accordance with this invention to provide a large number of packages in a continuous strip such as 10,000 or 15,000 packages per strip. Preferably after formation the packages are rolled on to a spool and delivered to customers in a continuous strip.

The portion of the strip 10 shown in Figure 1 includes three packets, all the same. Referring to the central packet, a first end seal 14 which is preferably an ultrasonically welded seal in which a multiplicity of sealing points 16 is formed in a cross-hatched arrangement extending over a predetermined length of the strip of packets. Preferably, the seal 14 is wide enough, or long enough if considered with respect to the longitudinal extent of the strip to permit the sealing area to be cut in the middle to divide the adjoining individual packets from the strip. Still further, the cross-hatched seal is formed either from continuous cross-hatched sealing lines or, more preferably, from an array of sealing points which may be round, square, diamond shape or any other convenient shape, arranged in a grid of intersecting rows that form a generally cross-hatched pattern. The cross-hatched pattern largely prevents fraying when the packages are cut apart while at the same time not forming points or lined points or line weakness that may allow the sorbent within the package to escape.

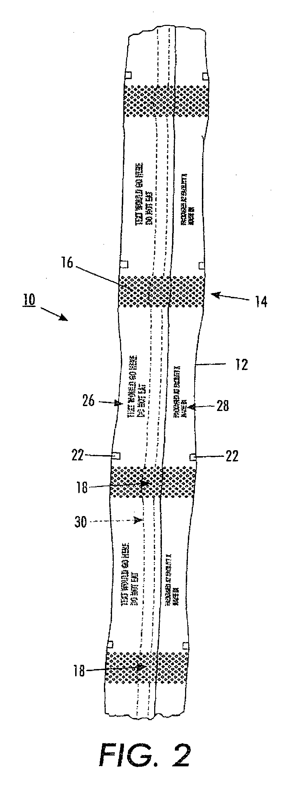

Referring briefly to Figure 2, the packets 10 are shown from the opposite side. As will be described in more detail below, vertical seal 30 is made on an overlapping portion of the edges of the packaging material to form an elongated tubular structure. Preferably, the seal 30 is formed by welding and more preferably by welding a portion, but not the entirety of the overlapping edges of the packaging material together. Preferably, when a non-woven polyolefin is employed as the packaging material, the welding process renders the welded portion wholly or partly transparent or at least translucent so that the contents of the packets may be seen through the welded portion of the package. Furthermore, when the transverse seal is formed, preferably the seal is formed across the entire of the packet and the thickest portion thereof, the portion where the edges overlap is rendered transparent or at least translucent by the welding process.

In distinction from packages previously known, the cross-hatched seal 14 produces a transparent region only in that portion of the seal where the edges of the packaging material overlap. Heretofore, especially where vertical line seals were created, the transparent portion appeared as a sequence of transparent vertical lines extending across the entire width of the package. In accordance with the present invention, while the localized small sealing regions 16 may be transparent these regions are quite small compared with the large transparent region formed approximately in the center of the seal.

The package also includes visible indicia such as the name, trademark, identification of the manufacturer and so forth at 20. Preferably, the visible indicia are printed with food grade inks, especially when the packets are designed to be used in connection with edible products or pharmaceuticals. While the packages preferably bear a legend warning against eating the packets themselves, the use of food grade inks reduces any detrimental effects caused by any ink rubbing off the packet on to the products in which the packets are used.

Furthermore, the packet appropriately includes one or more preferably two index marks 22 printed with the same ink as the visible indicia 20 and located at a predetermined position on the packet so that the seals 14 may be formed by positioning the packet in the sealing equipment using the indicia 22. The indicia 22 may appear on the front side, the back side or both as shown in Figures 1 and 2.

In addition, for even more accurate and high speed positioning of the packet during sealing and subsequently during separation and dispensing, a higher contrast stripe 24 may be printed on the packet using a higher contrast ink.

As an alternative, registration mark 24 may be used as a security feature to control the use of sorbent packets in the installation process. For example, a bar code encoding a predetermined number or sequence of numbers may be employed which can be read at the time of insertion, as explained more fully below, to ascertain that the packets being separated and inserted are authorized packets.

As another alternative, the mark 24 may be a trademark or a registered trademark whose use is permitted only by its owner. The insertion machine includes pattern recognition sensors for recognizing the trademark and permitting the cutting and insertion only of packets bearing the trademark thereby insuring that unauthorized packets are not used.

Figure 2 shows a slightly longer strip of packets, the type shown in figure 1 from the reverse side. The packets are separated from each other by the transverse seals 14 as described above. The reverse side of the package may or may not contain visible indicia 26 and 28 which preferably, but not necessarily is arranged on the packet on the left and right side of longitudinal seal 30. It is important, in accordance with a preferred aspect of this invention, that the indicia 20 on the front side of the packets and the indicia 26 and 28 on the backside of the packets be arranged such that no indicia falls within the sealing areas 14 and 30. By arranging the indicia so that no indicia falls within the sealing areas, and providing registration marks 22 and 24 for use by the sealing and filling apparatus, the problem of ink falling within the sealing areas and being loosened from the packets by the sealing process is avoided. This reduces or eliminates the degradation of the ink during the sealing process and the possible flaking of ink from the package which could contaminate, at least visually, the products into which the packets are placed.

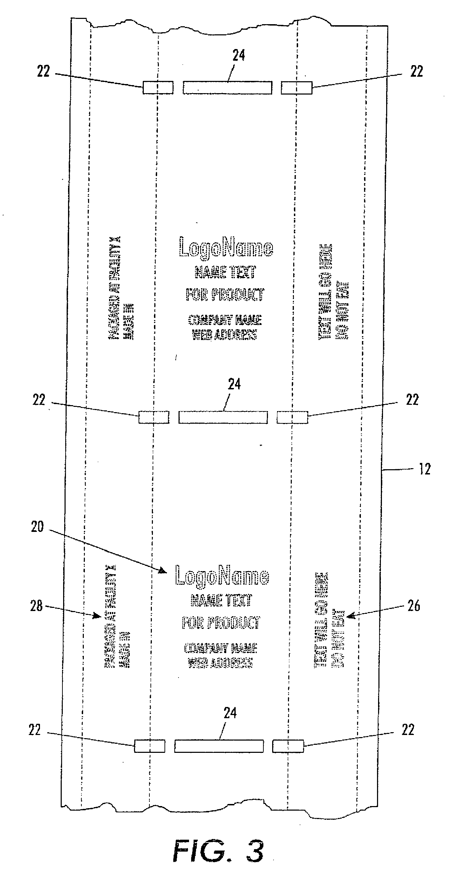

Figure 3 shows a portion of an elongated web of packaging material from which the packets of Figures 1 and 2 may be formed. The web may be any desired length but possibly relatively long lengths of material are used to form strips of packets that may be 10,000 or 15,000 packets long. While the web may be made from a variety of materials depending upon the nature of the sorbent enclosed within the packet, non-woven materials, preferable non-woven materials, more preferably non-woven, spun bonded polyester materials such as Tyvek spun bonded non-woven polyester manufactured by DuPont are used. While a variety of methods for printing the indicia 20, 26 and 28, and the index marks 22 and 24 on the web of material may be employed, flexographic printing with food grade ink is presently preferred.

Preferably, indicia 20, 26 and 28, and registration mark 22 are printed at one time in a third color and registration mark 24 is printed either at a separate printing station on the same press or subsequently. Registration marks 22 are disposed at a predetermined known distance from the indicia 20, 26 and 28 so that during filing and forming of the packets from the web, the longitudinal and lateral seals may be accurately placed so as not to overlap the areas carrying the printed indicia.

Preferably, registration mark 24 is aligned with registration marks 22. The registration mark 24 may take any of the variety of forms heretofore described.

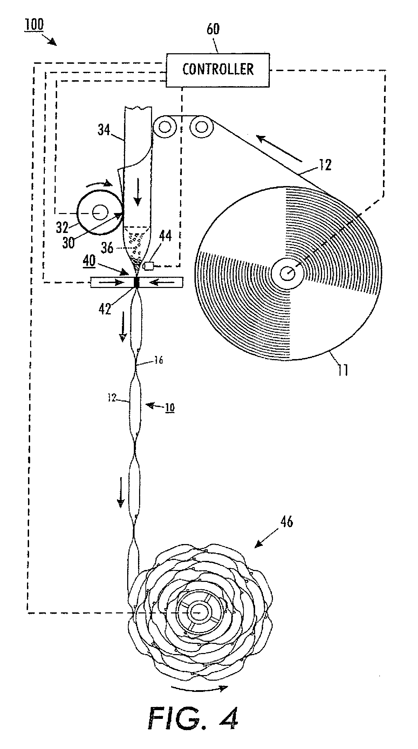

Figure 4 shows a machine for forming and filling the packets of sorbent material in accordance with this invention. Certain elements of the machine are well known and as such form no particular part of this invention and are not described in much detail.

The machine 112 includes a spool 11 carrying an elongated web 12 of preprinted material as shown in Figure 3. The web is led over one or more idler rollers to a forming station in which the web is formed around a hollow filling mandrel 34 to which the sorbent 36 passes in controlled amounts. An welding bar or roller 32 forms a longitudinal seal 30 by welding the web of material into a tubular shape in a manner known to those skilled in the art.

The lateral seal 16 is formed at a second welding station 40, preferably an ultrasonic welding station. As discussed, seal 16 is preferably a cross hatched seal formed from a multiplicity of discrete weld points.

Sorbent 36 is dispensed in predetermined quantities into the packets as the seals form. In accordance with this invention, a sensor 44 detects either the registration mark 22 or the registration mark 24 or both and controls the positioning of the strip of packets so that the seal 14 is formed at a pre selected location free from printed indicia. After the lateral seals are formed, the packets are wound on a take up real 46 for shipment to customers and ultimately for the dividing and inserting into product. By insuring that the lateral seal 14 is formed in an area free from printed indicia, ink build up on the ultrasonic seal 40 is reduced or eliminated thus making it possible to form very large numbers of packets without cleaning the packing machine.

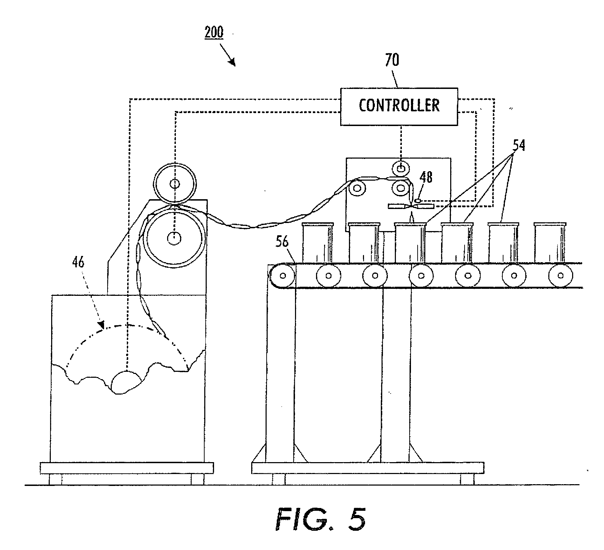

Figure 5 is a schematic view of apparatus for unrolling, cutting and inserting packets into product containers. The packets are wound on a spool 46 from which they are lead by rollers to a cutting station. A sensor 48 positions the strip of packets accurately at a cutting station so that the packets are separated from one another in the lateral seal area 14 preferably at the center of the seal area. Because the packets are free from printing in the seal area, no residue is deposited on the cutters by loose flakes of ink that have heretofore made it necessary to periodically stop the insertion process and clean the cutting station. Furthermore, because the visible indicia 20 is registered on the packet with respect to the lateral seals, each packet has accurately placed visible indicia thereon rather than having multiple indicia which overlap the lateral seal area and divided at the cutting station. After being cut, the packets 12 are inserted into product containers 54 which may for example be presented to the cutting station by a conveyor belt or the like as is well know to those skilled in the art.

While the invention has been described in connection with several presently preferred embodiments thereof, those skilled in the art will appreciate that many modifications and changes may be made therein without departing from the true spirit and scope of the invention which accordingly is intended to be defined solely by the appended claims.

## Claims

1. A method for forming sorbent packages comprising:
providing an elongated web (12) of preprinted packaging material, the preprinted packaging material comprising a repeating printed sequence, each occurrence of the sequence comprising (i) first printed indicia (20) and (ii) at least one index mark (22) spaced from the indicia, the printed indicia and the index mark comprising food grade ink;
wrapping the web of preprinted packaging material around a mandrel (34) arranged generally parallel to a longitudinal axis of the elongated web to form an overlapping sealing area that is free from printed indicia;
forming a first longitudinal seal (30) in the overlapping sealing area, the seal being free from printed indicia;
sensing the index mark;
forming a first lateral seal (14) a pre-determined longitudinal distance from the index mark in an area free from printed indicia, wherein the pre-determined distance is constant for each package;
inserting a quantity of sorbent material (36) into the package;
positioning the package for forming a second lateral seal (14) spaced from the first lateral seal; and
forming the second lateral seal in registration with the index mark in an area free from printed indicia.

2. The method for forming sorbent packages of claim 1 comprising the step of forming a second index mark (24) in registration with the first index mark.

3. The method for forming sorbent packages of claim 2 in which forming the second index mark comprises forming a proprietary index mark such as a trademark or bar code.

4. The method of claim 2 or 3 in which the second registration mark comprises an ink different from the first registration mark.

5. An elongated strip of sorbent packages (10) obtainable by a method according to any of claims 1 to 4, each package comprising:
a body formed from spun bonded non-woven polyethylene;
two lateral seals (14), one at each end of the body, each of the lateral seals comprising a knurled direct, adhesive free, seal having intersecting sealing lines each of which is arranged at an angle to the longitudinal axis of the package;
a longitudinal seal (30) extending along the length of the package,
between the lateral seals
printed indicia (20, 26, 28) on the package disposed substantially between the lateral seals, and spaced from the longitudinal seal, the longitudinal and lateral sealing areas being substantially free of printing;
a sorbent material (36) within the body; and **characterized by**
at least one registration mark (22) on the body, the mark disposed at a pre-determined longitudinal distance from at least one of the lateral seals, and outside of the sealing area, wherein the pre-determined distance is constant for each package of the elongated strip.

6. The elongated strip of sorbent packages of claim 5 in which the intersecting sealing lines comprise lines of discrete sealing points (16).

7. The elongated strip of sorbent packages of claim 5 or 6, wherein the longitudinal seal intersects the lateral seals and an at least translucent region (18) is formed at a region where the longitudinal seal intersects with the laterals seals.

8. An elongated web of preprinted packaging material for fabricating a sorbent package by the method of any of claims 1 to 4, comprising:
an elongated web of spun bonded polyester material (12);
first visible indicia (20) formed from food grade ink applied in a repeating sequence of locations along the length of the web; **characterised by**
a first index mark (22) associated with each instance of the first visible indicia formed simultaneously therewith from food grade ink and at a pre-determined distance in the longitudinal direction from the first visible indicia; and
a second index mark (24) in registration with the first index mark and formed separately therefrom.

9. The elongated web of claim 8 further comprising third visible indicia (26, 28) spaced laterally from the first visible (20) indicia and aligned longitudinally therewith, the third visible indicia formed from food grade ink.

10. Apparatus (200) adapted to separate an elongated strip of sorbent packages (10) according to any of claims 5, 6 or 7 into individual packets and inserting the packets into a product container (54) comprising:
a spool (46) having said elongated strip wound on the spool, each packet including an index mark (22) spaced a predetermined distance from an end of the packet;
a cutter separating the continuous strip of packets into individual packets;
a feeder receiving the packets from the spool and delivering the packets to the cutter;
a sensor (48) positioned adjacent the strip of packets between the spool and the cutter responsive to the index mark for positioning the strip of packets relative to the cutter for separating the packets from the strip at the end of each packet; and
a controller (70) coupled to the sensor (48) causing the apparatus to halt if the index mark is not detected.

11. The apparatus of claim 10 in which the index mark comprises a proprietary index mark such as a trademark or barcode.

12. A method for inserting sorbent packages into product containers (54) comprising:
providing an elongated strip of preprinted sorbent packages (10) according to any of claims 5, 6 or 7;
feeding the packets to a cutter sensing the index mark (22);
inhibiting the feeding step if no index mark is present;
cutting individual packets from the strip in registration with the index mark in an area free from printed indicia (20); and
inserting the cut packets into the product package.

## Patentansprüche

1. Verfahren zum Bilden von Sorptionsmittelverpackungen, umfassend:
Bereitstellen einer länglichen Bahn (12) aus vorgedrucktem Verpackungsmaterial, wobei das vorgedruckte Verpackungsmaterial eine sich wiederholende Drucksequenz umfasst, wobei jedes Auftreten der Sequenz (i) erste Druckzeichen (20) und (ii) mindestens eine Indexmarke (22) umfasst, die von den Druckzeichen beabstandet ist, wobei die Druckzeichen und die Indexmarke Lebensmitteltinte umfassen;
Wickeln der Bahn aus vorgedrucktem Verpackungsmaterial um einen Dorn (34), der allgemein parallel zu einer Längsachse der länglichen Bahn angeordnet ist, um eine sich überschneidenden Abdichtbereich zu bilden, der frei von den Druckzeichen ist;
Bilden einer ersten Längsdichtung (30) in dem sich überschneidenden Abdichtbereich, wobei die Dichtung frei von Druckzeichen ist; Abtasten der Indexmarke; Bilden einer ersten seitlichen Dichtung (14) in einem vorbestimmten Längsabstand von der Indexmarke in einem Bereich, der frei von Druckzeichen ist, wobei der vorbestimmte Abstand für jede Verpackung konstant ist;
Einführen einer Menge Sorptionsmittelmaterial (36) in die Verpackung; Positionieren der Verpackung zum Bilden einer zweiten seitlichen Dichtung (14), die von der ersten seitlichen Dichtung beabstandet ist; und
Bilden der zweiten seitlichen Dichtung in Deckung mit der Indexmarke in einem Bereich, der frei von Druckzeichen ist.

2. Verfahren zum Bilden von Sorptionsmittelverpackungen nach Anspruch 1, umfassend den Schritt des Bildens einer zweiten Indexmarke (24) in Deckung mit der ersten Indexmarke.

3. Verfahren zum Bilden von Sorptionsmittelverpackungen nach Anspruch 2, wobei das Bilden der zweiten Indexmarke das Bilden einer propietären Indexmarke wie einer Handelsmarke oder eines Strichcodes umfasst.

4. Verfahren nach Anspruch 2 oder 3, wobei das zweite Registrierungszeichen eine andere Tinte als das erste Registrierungszeichen umfasst.

5. Länglicher Streifen aus Sorptionsmittelverpackungen (10) die durch ein Verfahren nach einem der Ansprüche 1 bis 4 erhalten werden können, wobei jede Verpackung umfasst:
einen Körper, der aus einem Polyethylen-Spinnvlies ausgebildet ist; zwei seitliche Dichtungen (14), eine an jedem Ende des Körpers, wobei jede seitliche Dichtung eine gerändelte direkte, klebstofffreie Dichtung mit sich überschneidenden Dichtungslinien umfasst, die jeweils in einem Winkel zu der Längsachse der Verpackung angeordnet sind;
eine Längsdichtung (30), die sich entlang der Länge der Verpackung erstreckt, zwischen den seitlichen Dichtungsdruckzeichen (20, 26, 28) auf der Verpackung, die im Wesentlichen zwischen den seitlichen Dichtungen angeordnet sind und von der Längsdichtung beabstandet sind, wobei der Längs- und der seitliche Dichtungsbereich im Wesentlichen druckfrei ist;
ein Sorptionsmittelmaterial (36) innerhalb des Körpers; und **gekennzeichnet durch** mindestens ein Registrierungszeichen (22) auf dem Körper, wobei das Zeichen in einem vorbestimmten Längsabstand von mindestens den seitlichen Dichtungen oder der Außenseite des Dichtungsbereichs angeordnet ist, wobei der vorbestimmte Abstand konstant für jede Verpackung des länglichen Streifens ist.

6. Länglicher Streifen der Sorptionsmittelverpackungen nach Anspruch 5, wobei die sich überschneidenden Dichtungslinien Linien aus diskreten Dichtungspunkten (16) umfassen.

7. Länglicher Streifen aus Sorptionsmittelverpackungen nach einem der Ansprüche 5 oder 6, wobei die Längsdichtung die seitlichen Dichtungen überschneidet und mindestens ein durchscheinender Bereich (18) an einem Bereich ausgebildet wird, der sich mit den seitlichen Dichtungen überschneidet.

8. Längliche Bahn aus vorgedrucktem Verpackungsmaterial zum Herstellen einer Sorptionsmittelverpackung durch das Verfahren nach einem der Ansprüche 1 bis 4, umfassend:
eine längliche Bahn aus Spinnvlies-Polyestermaterial (12); erste sichtbare Druckzeichen (20) aus Lebensmitteltinte, die in einer Sequenz von Stellen entlang der Länge der Bahn wiederholt aufgebracht werden; **gekennzeichnet durch**
eine erste Indexmarke (22), die mit jedem der ersten Druckzeichen gleichzeitig damit aus Lebensmitteltinte ausgebildet wird und in einem vorbestimmten Abstand in Längsrichtung von den ersten sichtbaren Druckzeichen angeordnet ist; und eine zweite Indexmarke (24) in Deckung mit der ersten Indexmarke, die separat davon ausgebildet ist.

9. Längliche Bahn nach Anspruch 8, ferner umfassend dritte sichtbare Druckzeichen (26, 28), die seitlich von den ersten sichtbaren Druckzeichen (20) beabstandet sind und in Längsrichtung dazu ausgerichtet sind, wobei die dritten sichtbaren Druckzeichen aus Lebensmitteltinte ausgebildet sind.

10. Vorrichtung (200), die zum Trennen eines länglichen Streifens aus Sorptionsmittelverpackungen (10) nach einem der Ansprüche 5, 6 oder 7 in einzelne Pakete ausgelegt ist, und Einfügen der Pakete in einen Produktbehälter (54), umfassend:
eine Spule (46), wobei der längliche Streifen auf die Spule gewickelt ist, wobei jedes Paket eine Indexmarke (22) aufweist, die einen vorbestimmten Abstand von einem Ende des Pakets beabstandet ist;
eine Schneidvorrichtung, die den durchgehenden Streifen von Paketen in einzelne Pakete trennt; eine Zuführvorrichtung, welche die Pakete von der Spule aufnimmt und die Pakete der Schneidvorrichtung zuführt;
einen Sensor (48), der benachbart zu dem Streifen von Paketen zwischen der Spule und der Schneidvorrichtung angeordnet ist, und der auf die Indexmarke zum Anordnen des Streifens von Paketen in Bezug auf die Schneidvorrichtung zum Trennen der Pakete von dem Streifen am Ende jedes Pakets trennt; und
eine Steuerung (70), die mit dem Sensor (48) gekoppelt ist und bewirkt, dass die Apparatur anhält, wenn keine Indexmarke erkannt wird.

11. Vorrichtung nach Anspruch 10, wobei die Indexmarke eine propietäre Indexmarke wie eine Handelsmarke oder einen Strichcode umfasst.

12. Verfahren zum Einführen von Sorptionsmittelverpackungen in Produktbehälter (54), umfassend:
Bereitstellen eines länglichen Streifens aus vorbedruckten Sorptionsmittelverpackungen (10) nach einem der Ansprüche 5, 6 oder 7;
Zuführen der Pakete zu einer Schneidvorrichtung, welche die Indexmarke (22) erfasst; Verhindern des Zuführschrittes, wenn keine Indexmarke vorhanden ist; Schneiden einzelner Pakete aus dem Streifen in Deckung mit der Indexmarke in einem Bereich, der frei von Druckzeichen (20) ist; und
Einführen der geschnittenen Pakete in die Produktverpackung.

## Revendications

1. Procédé pour former des emballages de sorbant, comprenant les étapes suivantes:
fournir une bande allongée (12) de matériau d'emballage pré-imprimé, le matériau d'emballage pré-imprimé comprenant une séquence imprimée répétée, chaque occurrence de la séquence comprenant (i) une première indication imprimée (20) et (ii) au moins une marque de repérage (22) espacée de l'indication, l'indication imprimée et la marque de repérage comprenant une encre de qualité alimentaire;
enrouler la bande de matériau d'emballage pré-imprimé autour d'un mandrin (34) agencé essentiellement parallèlement à un axe longitudinal de la bande allongée de manière à former une région de scellage à recouvrement qui est dépourvue d'indication imprimée;
former un premier joint longitudinal (30) dans la région de scellage à recouvrement, ledit joint étant dépourvu d'indication imprimée;
détecter la marque de repérage;
former un premier joint latéral (14) à une distance longitudinale prédéterminée de la marque de repérage dans une région dépourvue d'indication imprimée, dans lequel la distance prédéterminée est constante pour chaque emballage;
insérer une quantité de matière de sorbant (36) dans l'emballage;
positionner l'emballage pour former un deuxième joint latéral (14) espacé du premier joint latéral; et
former le deuxième joint latéral en alignement avec la marque de repérage dans une région dépourvue d'indication imprimée.

2. Procédé pour former des emballages de sorbant selon la revendication 1, comprenant l'étape de formation d'une deuxième marque de repérage (24) alignée avec la première marque de repérage.

3. Procédé pour former des emballages de sorbant selon la revendication 2, dans lequel la deuxième marque de repérage comprend la formation d'une marque de repérage de propriétaire telle qu'une marque commerciale ou un code à barres.

4. Procédé pour former des emballages de sorbant selon la revendication 2 ou 3, dans lequel la deuxième marque de repérage comprend une encre différente de la première marque de repérage.

5. Bande allongée d'emballages de sorbant (10) pouvant être obtenue par un procédé selon l'une quelconque des revendications 1 à 4, chaque emballage comprenant:
un corps formé à partir de polyéthylène non tissé filé lié;
deux joints latéraux (14), un à chaque extrémité du corps, chacun des joints latéraux comprenant un joint direct moleté sans adhésif présentant des lignes de scellage qui se coupent dont chacune est agencée à un certain angle par rapport à l'axe longitudinal de l'emballage;
un joint longitudinal (30) qui s'étend le long de la longueur de l'emballage, entre les joints latéraux;
des indications imprimées (20, 26, 28) sur l'emballage disposées sensiblement entre les joints latéraux, et espacées du joint longitudinal, les régions de scellage longitudinale et latérales étant sensiblement dépourvues d'impression;
une matière de sorbant (36) à l'intérieur du corps, et
**caractérisée par**:
au moins une marque de repérage (22) sur le corps, la marque étant disposée à une distance longitudinale prédéterminée d'au moins un des joints latéraux, et à l'extérieur de la région de scellage, dans lequel la distance prédéterminée est constante pour chaque emballage de la bande allongée.

6. Bande allongée d'emballages de sorbant selon la revendication 5, dans laquelle les lignes de scellage qui se coupent comprennent des lignes de points de scellage discrets (16).

7. Bande allongée d'emballages de sorbant selon la revendication 5 ou 6, dans laquelle le joint longitudinal coupe les joints latéraux et une région au moins translucide (18) est formée à une région où le joint longitudinal coupe les joints latéraux.

8. Bande allongée de matériau d'emballage pré-imprimé pour fabriquer un emballage de sorbant par le procédé selon l'une quelconque des revendications 1 à 4, comprenant:
une bande allongée de matière de polyester filée liée (12);
une première indication visible (20) formée à partir d'une encre de qualité alimentaire appliquée dans une séquence répétée d'emplacements le long de la longueur de la bande;
**caractérisée par**:
une première marque de repérage (22) associée à chaque occurrence de la première indication visible formée simultanément avec celle-ci à partir d'une encre de qualité alimentaire et à une distance prédéterminée dans la direction longitudinale à partir de la première indication visible; et
une deuxième marque de repérage (24) alignée avec la première marque de repérage et formée séparément de celle-ci.

9. Bande allongée selon la revendication 8, comprenant en outre une troisième indication visible (26, 28) espacée latéralement de la première indication visible (20) et alignée de façon longitudinale avec celle-ci, la troisième indication visible étant formée à partir d'une encre de qualité alimentaire.

10. Appareil (200) adapté pour séparer une bande allongée d'emballages de sorbant (10) selon l'une quelconque des revendications 5, 6 ou 7 en paquets individuels et pour insérer les paquets dans un conteneur de produits (54), comprenant:
une bobine (46) présentant ladite bande allongée enroulée sur la bobine, chaque paquet comportant une marque de repérage (22) espacée d'une distance prédéterminée d'une extrémité du paquet;
un dispositif de coupe qui sépare la bande continue d'emballages en paquets individuels;
un dispositif d'alimentation qui reçoit les paquets en provenance de la bobine et qui délivre les paquets au dispositif de coupe;
un capteur (48) qui est positionné à proximité de la bande de paquets entre la bobine et le dispositif de coupe sensible à la marque de repérage pour positionner la bande de paquets par rapport au dispositif de coupe afin de séparer les paquets de la bande à la fin de chaque paquet; et
un dispositif de commande (70) qui est couplé au capteur (48) qui entraîne l'appareil à s'arrêter si la marque de repérage n'est pas détectée.

11. Appareil selon la revendication 10, dans lequel la marque de repérage comprend une marque de repérage de propriétaire telle qu'une marque commerciale ou un code à barres.

12. Procédé pour insérer des emballages de sorbant dans des conteneurs de produits (54), comprenant les étapes suivantes:
fournir une bande allongée d'emballages de sorbant pré-imprimés (10) selon l'une quelconque des revendications 5, 6 ou 7;
amener les paquets à un dispositif de coupe qui détecte la marque de repérage (22);
empêcher l'étape d'alimentation si aucune marque de repérage n'est présente;
couper des paquets individuels à partir de la bande en alignement avec la marque de repérage dans une région dépourvue d'indication imprimée (20); et
insérer les paquets coupés dans l'emballage de produits.
